(19) **Europäisches Patentamt / European Patent Office / Office européen des brevets**

(11) **EP 4 651 542 A1**

(12) **EUROPEAN PATENT APPLICATION**
published in accordance with Art. 153(4) EPC

(43) Date of publication:
**19.11.2025 Bulletin 2025/47**

(21) Application number: **23924984.0**

(22) Date of filing: **10.11.2023**

(51) International Patent Classification (IPC):
***H04W 24/02*** (2009.01)

(52) Cooperative Patent Classification (CPC):
**H04W 12/06; H04W 24/02; H04W 40/02; H04W 48/16;** Y02D 30/70

(86) International application number:
**PCT/CN2023/130876**

(87) International publication number:
**WO 2024/179033 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.02.2023 CN 202310217095**

(71) Applicant: **ZTE CORPORATION**
**Shenzhen, Guangdong 518057 (CN)**

(72) Inventor: **LIANG, Zhiying**
**Shenzhen, Guangdong 518057 (CN)**

(74) Representative: **Chimini, Francesco et al**
**Jacobacci & Partners S.p.A.**
**Piazza della Vittoria 11**
**25122 Brescia (IT)**

(54) **WIRELESS HOTSPOT ENABLING METHOD, SET-TOP BOX, COMMUNICATION SYSTEM AND STORAGE MEDIUM**

(57) Provided in the present disclosure is a wireless hotspot enabling method, which is applied to a set-top box, wherein the set-top box supports wireless compatible networking with a plurality of routing devices. The method comprises: searching for a target routing device, and performing wireless compatible networking with the target routing device, wherein the target routing device is one of a plurality of routing devices; acquiring a hotspot configuration parameter of the target routing device; acquiring a target communication channel of the current communication environment of a set-top box, and acquiring a channel parameter; optimizing the hotspot configuration parameter according to the target communication channel and the channel parameter, and generating a hotspot driving parameter; and enabling a wireless hotspot of the set-top box on the basis of the hotspot driving parameter.

Fig. 2

```
S101
Searching for a target routing device, and performing
wireless compatible networking with the target routing
device, wherein the target routing device is one of the
plurality of routing devices
          │
          ▼
S102
Acquiring a hotspot configuration parameter of the target
routing device
          │
          ▼
S103
Acquiring a target communication channel of the set-top
box in a current communication environment, and acquiring
a channel parameter
          │
          ▼
S104
Optimizing the hotspot configuration parameter according
to the target communication channel and the channel
parameter to generate a hotspot driving parameter
          │
          ▼
S105
Enabling a wireless hotspot of the set-top box based on the
hotspot driving parameter
```

EP 4 651 542 A1

## Description

## Cross-Reference to Related Application

The present disclosure is based on and claims priority to Chinese Patent Application 202310217095.1, filed on February 27, 2023 and entitled "Wireless Hotspot Enabling Method, Set-Top Box, Communication System and Storage Medium", the disclosure of which is incorporated herein by reference in its entirety.

## Technical Field

The present disclosure relates to the technical field of communications, and in particular, to a wireless hotspot enabling method, a set-top box, a communication system and a storage medium.

## Background

With the development of communication technologies, set-top boxes can provide wireless hotspots for users. Thereby, set-top boxes are able to perform communication networking with routing devices, providing the users with high-speed wireless hotspots, expanding coverage areas of wireless signals, and further improving the network environment. However, a wireless hotspot of a set-top box is usually a single-band wireless hotspot, making it difficult to simultaneously balance between transmission rate and penetration capability. At the same time, after the set-top box turns on a wireless hotspot, configuration parameters of the wireless hotspot cannot be automatically updated, leading to a waste in idle wireless resources. As a result, the set-top box cannot provide a high-performance wireless hotspot in the constructed communication network, which may lead to a decline in the overall performance of the communication network.

## Summary

Embodiments of the present disclosure provide a wireless hotspot enabling method, a set-top box, a communication system and a storage medium, which may improve the performance of a wireless hotspot provided by a set-top box in an Easymesh environment.

According to a first aspect of the embodiments of the present disclosure, provided is a wireless hotspot enabling method, which is applied to a set-top box supporting wireless compatible networking with a plurality of routing devices. The wireless hotspot enabling method includes: searching for a target routing device, and performing wireless compatible networking with the target routing device, wherein the target routing device is one of the plurality of routing devices; acquiring a hotspot configuration parameter of the target routing device; acquiring a target communication channel of the set-top box in a current communication environment, and acquiring a channel parameter; optimizing the hotspot configuration parameter according to the target communication channel and the channel parameter to generate a hotspot driving parameter; and enabling a wireless hotspot of the set-top box based on the hotspot driving parameter.

According to a second aspect of the embodiments of the present disclosure, provided is a set-top box. The set-top box includes a memory, a processor, a program stored on the memory and capable of running on the processor, and a data bus for implementing connection communication between the processor and the memory, wherein the program, when executed by the processor, implements operations of the wireless hotspot enabling method according to any one of the embodiments of the present disclosure.

According to a third aspect of the embodiments of the present disclosure, provided is a communication system. The communication system includes a routing device and a set-top box, wherein the set-top box is the set-top box in any one of the embodiments of the present disclosure.

According to a fourth aspect of the embodiments of the present disclosure, provided is a storage medium for computer readable storage, wherein the storage medium stores one or more programs, and the one or more programs are executable by one or more processors, so as to cause the one or more processors to implement operations of the wireless hotspot enabling method according to any one of the embodiments of the present disclosure.

## Brief Description of the Drawings

Fig. 1 is a schematic structural diagram of a communication system according to one or more embodiments of the present disclosure;

Fig. 2 is a schematic flowchart of a wireless hotspot enabling method according to one or more embodiments of the present disclosure;

Fig. 3 is a schematic flowchart of a networking method according to one or more embodiments of the present disclosure;

Fig. 4 is a schematic flowchart of a method for updating a hotspot configuration parameter according to one or more embodiments of the present disclosure;

Fig. 5 is a diagram of a scanning result of a communication environment according to one or more embodiments of the present disclosure;

Fig. 6 is a schematic flowchart of a wireless hotspot enabling method according to one or more embodiments of the present disclosure; and

Fig. 7 is a structural block diagram of a set-top box according to one or more embodiments of the present disclosure.

## Detailed Description of the Embodiments

To enable those skilled in the art to better understand the technical solution provided herein, the following text, in conjunction with the accompanying drawings, provides a detailed description of the heat dissipation device and base station equipment provided by the embodiments of the present disclosure.

In the following, reference is made to the accompanying drawings to fully describe exemplary embodiments, but these exemplary embodiments may be embodied in different forms and should not be interpreted as being limited to the embodiments set forth in the present disclosure. On the contrary, the purpose of providing these embodiments is to make the present disclosure thorough and complete, and to enable those skilled in the art to fully understand the scope of the present disclosure.

Unless conflicted, the various embodiments and the features within the various embodiments of the present disclosure may be combined with each other.

As used herein, the term "and/or" includes any and all combinations of one or more related listed items.

The terms used in the present disclosure are used solely for the purpose of describing exemplary embodiments and are not intended to limit the present disclosure. As used herein, the singular forms "a" and "the" are intended to include the plural forms unless the context clearly indicates otherwise. It will also be understood that when the terms "including" and/or "comprising" are used in this specification, it means that the listed features, entities, steps, operations, elements, and/or components are present, but do not exclude the presence or addition of one or more other features, entities, steps, operations, elements, components, and/or their groups.

Unless otherwise limited, all terms used herein (including technical and scientific terms) have the same meaning as understood by those skilled in the art. It will also be understood that terms defined in common dictionaries should be interpreted to have a meaning consistent with their meaning in the relevant technology and the context of the present disclosure, and should not be interpreted to have an idealized or overly formal meaning unless explicitly limited as such in the present disclosure.

Easymesh is a Wi-Fi certification standard that enables hardware compatibility among networking devices from different manufacturers. Multiple networking devices that support Easymesh can share the same network name and password. Mobile terminal devices connected to any of these networking devices belong to the same communication network, and can seamlessly perform connection handover between the different networking devices.

With the development of wireless hotspot technologies in set-top boxes, the wireless chips in set-top boxes can provide wireless hotspots when idle. At the same time, set-top boxes can also support Easymesh, and can be connected into Easymesh communication networks to extend the signal coverage area. However, the performance of the wireless hotspots provided by the set-top boxes is unstable. If the wireless hotspots are required to continuously provide dual-band wireless signals that meet both high-speed and strong penetration requirements, the playback capabilities of the set-top boxes themselves may be affected. Therefore, connecting set-top boxes into the communication network may lead to a decline in the overall capability of the communication network.

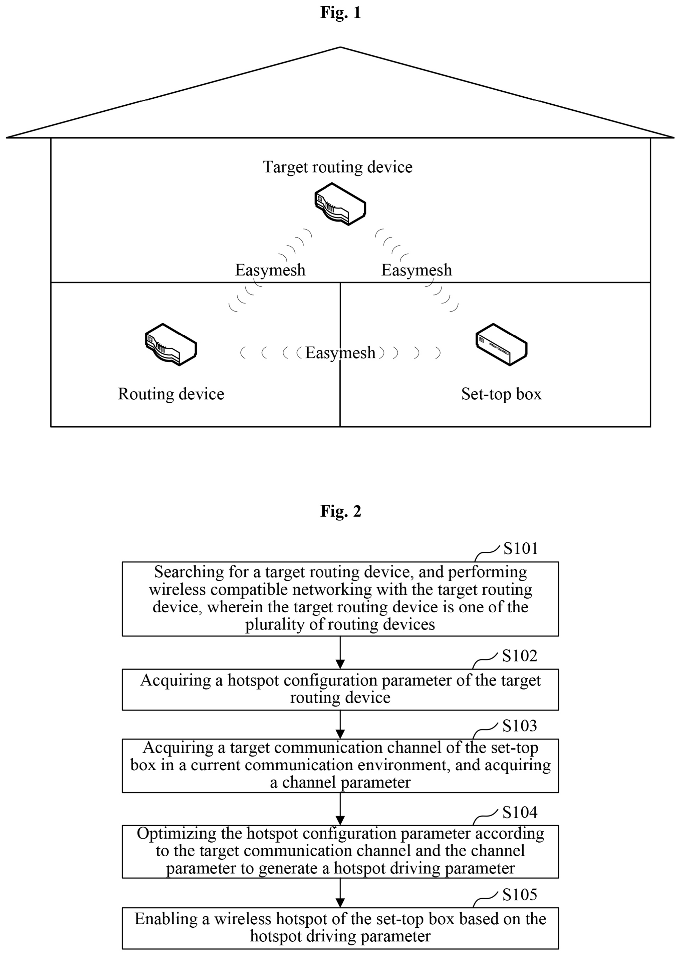

As shown in Fig. 1, a communication system is provided in the embodiments of the present disclosure. The communication system includes a plurality of network devices. The network devices may include routing device(s) and set-top box(es). The routing device(s) and the set-top box(es) perform communication networking through Easymesh. After networking, one of the routing devices serves as a target routing device to manage the entire communication networking.

A wireless hotspot enabling method applied to a set-top box is provided in the embodiments of the present disclosure, so as to improve the transmitting capability of a wireless signal of the set-top box, thereby better playing a role of the set-top box in communication networking, and improving the overall performance of the communication networking.

As shown in Fig. 2, a wireless hotspot enabling method applied to a set-top box supporting wireless compatible networking with a plurality of routing devices is provided. The wireless compatible networking may be implemented by means of Easymesh. The wireless hotspot enabling method includes operations S101-S105.

In operation S101, the set-top box searches for a target routing device, and performs wireless compatible networking with the target routing device, wherein the target routing device is one of the plurality of routing devices.

For illustrative purposes, among a plurality of routing devices that form a communication network through the Easymesh standard, there exist a master routing device and subordinate routing devices. Due to limited interaction between the master routing device and the subordinate routing devices, when the master routing device needs to synchronize multiple configuration parameters and send the multiple configuration parameters down, the subordinate routing devices cannot determine whether the master routing device has finished sending all the configuration parameters through packets from the master routing device. Moreover, after a subordinate routing device enables a wireless hotspot, the master routing device is also unable to detect this wireless hotspot and thus cannot manage the wireless hotspot of the subordinate routing device.

It should be noted that the master routing device is one among the plurality of routing devices, and is typically set as the master routing device from the plurality of routing devices by a user during the communication networking. The plurality of routing devices included in the communication network are usually designated by the user. However, the connection of set-top boxes into the communication network requires a more flexible networking approach.

In the present disclosure, the set-top box supports an IEEE1905 protocol, which enables the set-top box to implement automatic discovery, automatic configuration, roaming functionality, and other information collection features within the communication network. The set-top box communicates with the target routing device, which is the master routing device, through the IEEE1905 protocol.

For example, the set-top box may automatically performing networking detection through the IEEE1905 protocol. If there are routing devices supporting Easymesh in the current communication environment, the set-top box sends a request to join the network to the detected target routing device to obtain wireless hotspot configurations such as a network name and a connection password. The set-top box can also update the configuration parameters in a timely manner after the target routing device updates the configuration parameters.

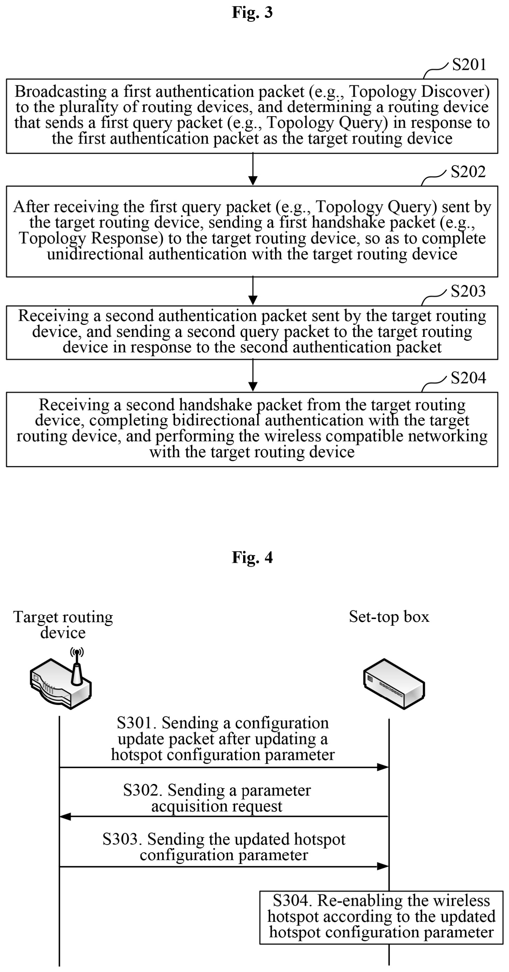

In some embodiments, when implementing the search for the target routing device and performing wireless compatible networking with the target routing device, the set-top box carries out the networking method as shown in Fig. 3, which includes operations S201-S204 detailed as follows.

In operation S201, the set-top box broadcasts a first authentication packet (e.g., Topology Discover) to the plurality of routing devices, and determines a routing device that sends a first query packet (e.g., Topology Query) in response to the first authentication packet as the target routing device.

In operation S202, after receiving the first query packet (e.g., Topology Query) sent by the target routing device, the set-top box sends a first handshake packet (e.g., Topology Response) to the target routing device, so as to complete unidirectional authentication with the target routing device.

In operation S203, the set-top box receives a second authentication packet sent by the target routing device, and sends a second query packet to the target routing device in response to the second authentication packet.

In operation S204, the set-top box receives a second handshake packet from the target routing device, completes bidirectional authentication with the target routing device, and performs the wireless compatible networking with the target routing device.

It should be noted that among the plurality of routing devices in the communication network, only the target routing device is capable of responding to the first authentication packet. Additionally, when the target routing device sends the first handshake packet, the target routing device also sends a second authentication packet to initiate unidirectional authentication with the set-top box.

By employing the aforementioned networking method, the set-top box is able to complete bidirectional authentication with the target routing device, thereby enabling automatic and rapid joining the communication network where the target routing device is located.

In some embodiments, after performing the wireless compatible networking with the target routing device, the wireless hotspot enabling method may further include: the set-top box sends a configuration compatibility request (e.g., AP autoconfiguration search) to the target routing device, establishes a configuration compatibility relationship with the target routing device after receiving a compatibility permission packet (e.g., AP autoconfiguration response) that the target routing device sends in response to the configuration compatibility request (e.g., AP autoconfiguration search), and the set-top box synchronously updates the hotspot configuration parameter of the target routing device based on the configuration compatibility relationship.

Specifically, the set-top box that joins the communication network can acquire the configuration parameter of the wireless hotspot sent by the target routing device, but it is still possible that the acquired configuration parameter is not the latest configuration parameter. Therefore, in the embodiments of the present disclosure, the set-top box actively requests compatible configurations to achieve synchronized updates of the latest configuration parameter. The set-top box sends a configuration compatibility request to the target routing device, which, upon receiving the configuration compatibility request, responds with a compatibility permission packet. After the set-top box receives the compatibility permission packet, it allows the target routing device to automatically update the configuration parameter of the wireless hotspot of the set-top box. This prevents the occurrence of unsynchronized configuration parameter, enhances the coordination of the system prevents signal imbalances within the communication network, and thereby improves the overall communication performance of the network. Specifically, a set-top box participating in communication networking can acquire a configuration parameter of a wireless hotspot sent by a target , but it may still occur that the acquired configuration parameter is not the latest; therefore, in the embodiment of the present disclosure, the set-top box implements synchronous update of the latest configuration parameter by actively requesting a configuration compatible manner. A set-top box sends a configuration compatibility request to a target , and the target returns a compatibility permission packet after receiving same, after receiving the , the set-top box allows the target to automatically update the configuration parameters of the wireless hotspot of the set-top box, in this way, the occurrence of configuration parameter being unable to be updated synchronously can be prevented, the coordination of the system is improved, and the occurrence of signal imbalance in communication networking is prevented, thus, the overall communication performance of the communication network is improved.

In operation S102, the set-top box acquires a hotspot configuration parameter of the target routing device.

For illustrative purposes, based on the Easymesh standard, the set-top box, acting as a subordinate routing device, needs to enable a wireless hotspot according to the hotspot configuration parameter sent by the target routing device.

In some embodiments, when acquiring the hotspot configuration parameter of the target routing device, the set-top box specifically executes the following operations of sending a parameter acquisition request to the target routing device, and acquiring the hotspot configuration parameter that the target routing device sends in response to the parameter acquisition request, wherein the hotspot configuration parameter is used for enabling the wireless hotspot of the target routing device.

Specifically, the set-top box sends a parameter acquisition request (e.g., AP autoconfiguration WSC (M1) packet) to the target routing device to request the exchange of the configuration parameter of the wireless hotspot. Upon receiving the parameter acquisition request, the target routing device responds with multiple sets of hotspot configuration parameters (e.g., AP autoconfiguration WSC (M2) packet). The hotspot configuration parameter at least includes: a Service Set Identifier (SSID), a security mechanism, and an encryption key used by the target routing device on multiple frequency bands such as 2.4G and 5G/6G. The set-top box parses the AP autoconfiguration WSC (M2) packet and extracts the SSID, the security mechanism, and the encryption key, etc.

In some embodiments, the hotspot configuration parameter (e.g., in the AP autoconfiguration WSC (M2) packet) needs to be encrypted to prevent it from being cracked by others and to enhance the security of the communication network. The hotspot configuration parameter is encrypted using a preset encryption module (Encrypted Settings), for example, an AES-128-CBC algorithm is used to encrypt the hotspot configuration parameter before sending the hotspot configuration parameter to the set-top box, which then decrypts the encrypted hotspot configuration parameter to obtain the hotspot configuration parameter.

In this way, the issue of the set-top box acquiring the hotspot configuration parameter from the target routing device is resolved, the efficiency of information interaction between the set-top box and the target routing device is improved, and the security of information interaction is ensured.

In some embodiments, the target routing device sends the hotspot configuration parameter at preset time intervals in response to the parameter acquisition request. When sending the parameter acquisition request to the target routing device, and acquiring the hotspot configuration parameter that the target routing device sends in response to the parameter acquisition request, the following operations are further performed: in a case where the hotspot configuration parameter is not acquired again after the preset time interval, re-sending the parameter acquisition request to the target routing device.

Specifically, after the preset time interval, if the set-top box does not receive a new AP autoconfiguration WSC (M2) packet, the set-top box actively initiates a second AP autoconfiguration WSC (M1) packet to request the target routing device to send down the wireless hotspot configuration again. In this way, within an Easymesh network, the set-top box can update the wireless hotspot configuration based on changes in the upstream environment.

In some embodiments, if the hotspot configuration parameter of the target routing device is updated, for example, if the 5G hotspot bandwidth is updated from 80MHz to 40MHz, then the set-top box acquires the updated hotspot configuration parameter to re-enable (restart) the wireless hotspot.

Specifically, as shown in Fig. 4, the method for updating the hotspot configuration parameter includes operations S301-S304 which are detailed as follows.

In operation S301, a configuration update packet is sent to the set-top box.

In operation S302, a parameter acquisition request is sent to the target routing device after the configuration update packet is received.

In operation S303, the updated hotspot configuration parameter is sent to the set-top box after receiving the parameter acquisition request.

In operation S304, the wireless hotspot is re-enabled (restarted) according to the updated hotspot configuration parameter.

Through the aforementioned process, the flow of the automatic configuration phase of Easymesh is optimized, which can prevent the occurrence of under-delivery or omission of the hotspot configuration parameter. This ensures that the set-top box receives the latest hotspot configuration parameter, thereby improving the fault tolerance and stability of the communication network, and enhancing the user's experience.

In operation S103, the set-top box acquires a target communication channel of the set-top box in a current communication environment, and acquires a channel parameter.

For illustrative purposes, the set-top box is equipped with wireless scanning capabilities. After receiving the wireless hotspot configuration, the set-top box scans the current environment to select a channel with the least interference, an optimal bandwidth with the best rate, and/or the best transmission power on multiple frequency bands such as 2.4GHz and 5GHz/6GHz, and integrates these parameters into the wireless hotspot configuration.

In some embodiments, when acquiring the target communication channel of the set-top box in the current communication environment, the set-top box executed the following operations: scanning a plurality of communication channels in the current communication environment, and acquiring a number of wireless hotspots on each of the plurality of communication channels and a signal strength of each of the wireless hotspots; determining a weighted value of each of the plurality of communication channels according to the number of the wireless hotspots and the signal strength; and determining the target communication channel according to the weighted value.

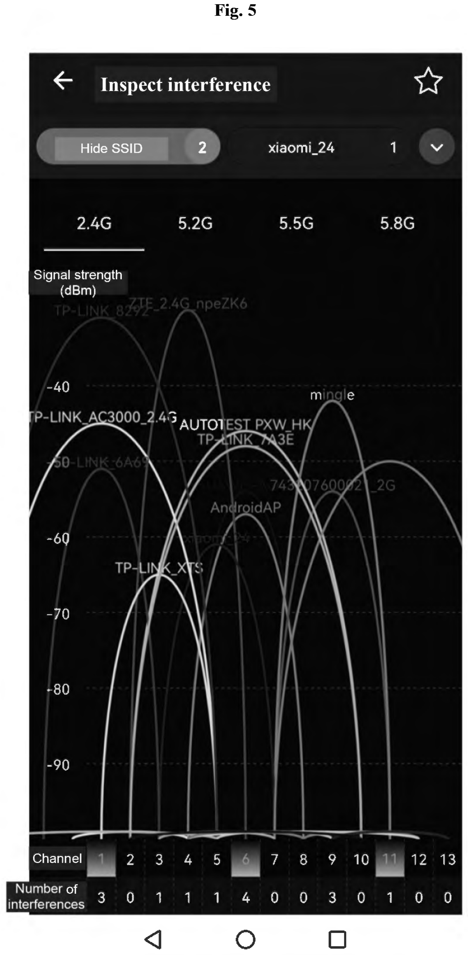

For example, the set-top box uses its wireless scanning function to scan the current communication environment, and the scanning result is as shown in Fig. 5. Among communication channels 1-13 in the current communication environment, the number of wireless hotspots on communication channels 1, 6, and 9 is greater than or equal to a preset number, for example, if the preset number is 2, the set-top box determines the target communication channel among channels 1, 6, and 9. The set-top box calculates the weighted value of each communication channel using a channel occupancy formula and determines the communication channel with the smallest weighted value as the target communication channel. The channel occupancy formula is:

$$a = \sum \left( -100 \, / \, d \right).$$

In the formula, a represents the weighted value of the communication channel, and d represents an average signal strength on the communication channel. After calculating with the channel occupancy formula, the weighted values for communication channels 1, 6, and 9 are calculated to be 7.3, 7.9, and 6.6, respectively. Therefore, the set-top box determines communication channel 9 as the target communication channel.

In operation S104, the set-top box optimizes the hotspot configuration parameter according to the target communication channel and the channel parameter to generate a hotspot driving parameter.

For illustrative purposes, after receiving the hotspot configuration parameter sent by the target routing device, the set-top box cannot directly use the hotspot configuration parameter to enable a high-performance wireless hotspot, since the hotspot configuration parameter is generated by the target routing device based on its own communication environment and may not be optimal for the set-top box. Therefore, instead of enabling the wireless hotspot directly according to the hotspot configuration parameter, the set-top box needs to optimize the hotspot configuration parameter based on the quality of various communication channels in the current communication environment, and then enable the wireless hotspot based on the optimized hotspot configuration parameter (i.e., the hotspot driving parameter).

In an exemplary embodiment, the set-top box operates on an Android system, which provides a limited number of channel parameters, potentially not utilizing the full capabilities of a wireless chip of the set-top box to enable a higher-performance wireless hotspot.

In some embodiments, a native High Integrity Data Link (HIDL) in the Android system only supports sending parameters such as communication channel and communication band to the AP authentication component hostapd of the set-top box, which is used to implement wireless scanning functionality. Therefore, by adding two parameter types, i.e., ChannelWidth (wireless bandwidth) and TxPower (wireless transmission power), to the native HIDL and expanding the support of Android's native interface, hostapd can receive more wireless hotspot parameters.

After determining the target communication channel, the set-top box receives the corresponding channel parameter through hostapd. The channel parameter includes at least ChannelWidth (wireless bandwidth) and TxPower (wireless transmission power). After receiving the channel parameter, hostapd first parses the channel parameter, and then generates a config file and passes the config file to the hostapd main program. For example, hostapd sends Channel Width=40, which is then parsed by an algorithm into a parameter required by the underlying WiFi driver, such as (HT)_capab= [HT40-][HT40+] and vht_oper_chwidth=0, which are used to set the HT scanning mode and operating bandwidth and are utilized in subsequent processes to optimize the hotspot configuration parameter to generate the hotspot driving parameter.

In some embodiments, when optimizing the hotspot configuration parameter according to the target communication channel and the channel parameter, the set-top box executes the following operations: comparing a latest acquired hotspot configuration parameter with a previously acquired hotspot configuration parameter; in a case where the latest acquired hotspot configuration parameter is the same as the previously acquired hotspot configuration parameter, generating the hotspot driving parameter according to the latest acquired hotspot configuration parameter and the channel parameter; and in a case where the latest acquired hotspot configuration parameter is not the same as the previously acquired hotspot configuration parameter, re-sending the parameter acquisition request to the target routing device.

Through the aforementioned process, the hotspot driving parameter of the set-top box is optimized, enabling the set-top box to enable a high-performance wireless hotspot that balances data transmission rates and signal penetration capabilities.

In operation S105, the set-top box enables a wireless hotspot of the set-top box based on the hotspot driving parameter.

Specifically, the set-top box enables a wireless hotspot in bridge mode, where hostapd first establishes a network bridge based on the hotspot driving parameter and adds the network interface specified in the hotspot driving parameter to the network bridge. The set-top box also detects currently available Ethernet ports and adds these Ethernet ports to the network bridge, thereby establishing a communication link between the internal network of the set-top box and the external network, providing network access capability for downstream devices. After the network bridge is established, hostapd issues corresponding commands to the hardware driver of the wireless hotspot based on the various sub-parameters in the hotspot driving parameter, thereby enabling the wireless hotspot. After the wireless hotspot is enabled, the set-top box sends an AP autoconfiguration UP packet to the routing device, indicating that the wireless hotspot of the set-top box has been properly enabled and reporting the performance of the wireless hotspot of the set-top box. By enabling the wireless hotspot in the bridge mode, the set-top box can hand over the management of downstream wireless devices to the target routing device, thereby improving the management efficiency of the communication network and the smoothness with which wireless devices switch between wireless hotspots of different routing devices.

In some embodiments, the set-top box enables wireless hotspots at 2.4GHz and 5GHz/6GHz based on the hotspot driving parameter, such that other wireless devices, such as mobile devices, can connect through the wireless hotspots.

In some embodiments, when a mobile device is within the range of the wireless hotspot of the set-top box and the signal strength of the set-top box is better within the communication network, if the mobile device is not connected to the wireless hotspot provided by the set-top box, the set-top box will notify the target routing device to send a command to migrate the mobile device to the wireless hotspot provided by the set-top box.

In some embodiments, after other wireless devices join the communication network, the set-top box actively collects wireless capabilities of other wireless devices and reports the collected wireless capabilities to the target routing device for network management.

In some embodiments, after the wireless hotspot of the target routing device is re-enabled, the target routing device broadcasts information frames (Beacon Frames). If the SSID remains unchanged and the mobile device has previously connected to that wireless hotspot, the mobile device can automatically reconnect to the wireless hotspot.

In some embodiments, the set-top box enables dual-band wireless hotspots, including a first channel wireless hotspot and a second band wireless hotspot, for example, the first channel wireless hotspot is a 2.4G wireless hotspot, and the second band wireless hotspot is a 5G wireless hotspot. When the set-top box detects changes in the hotspot configuration parameter sent by the target routing device, if the changed hotspot configuration parameter corresponds to either the first channel wireless hotspot or the second band wireless hotspot, the set-top box individually disables (shuts down) the corresponding first channel wireless hotspot or the second band wireless hotspot and re-enables (restarts) the corresponding first channel wireless hotspot or the second band wireless hotspot based on the latest hotspot configuration parameter. If the changed hotspot configuration parameter corresponds to both the first channel wireless hotspot and the second band wireless hotspot, the set-top box disables (shuts down) both the first channel wireless hotspot and the second band wireless hotspot and re-enables (restarts) both the first channel wireless hotspot and the second band wireless hotspot based on the latest hotspot configuration parameter. After the re-enabling (restart), the set-top box sends an AP autoconfiguration UP packet to the target routing device, notifying the target routing device that the wireless hotspot of the set-top box has been properly enabled.

The wireless hotspot enabling method provided in the embodiments of the present disclosure allows the set-top box to automatically synchronize and update the hotspot configuration parameter of the target routing device, avoiding the need to reconfigure the set-top box after changes to the hotspot of the target router device. This simplifies the parameter configuration process, enhances the user experience, and enables the set-top box to configure high-performance communication channels and channel parameters based on the current communication environment, improving the communication transmission rate and signal quality of the set-top box. This, in turn, better utilizes the set-top box in the communication network, enhancing the overall performance of the network.

It should be noted that the wireless hotspot enabling method provided in the embodiments of the present disclosure is not only applicable to a set-top box but also to a network devices used to enable wireless hotspots, such as a routing device.

To more clearly introduce the technical solutions of the present disclosure, an exemplary embodiment will be used to further illustrate the technical solutions of the present disclosure. It should be noted that this exemplary embodiment is for elaborating on the technical solutions of the present disclosure and does not limit the present disclosure.

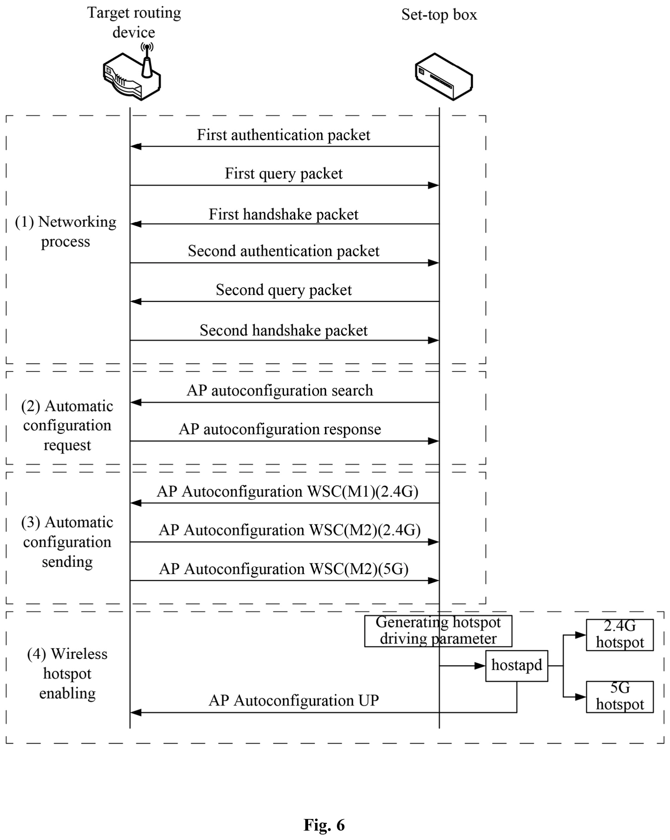

Please refer to Fig. 6, which shows a schematic flowchart of a wireless hotspot enabling method. As shown in Fig. 6, forming a communication network with a target routing device and enabling a wireless hotspot under that communication network requires four processes by the set-top boxes: network formation (i.e., networking) (1), automatic configuration request (2), automatic configuration sending (3), and wireless hotspot enablement (4). In the network formation process (1), the set-top box sends a first authentication packet (e.g., Topology Discover) to the target routing device, which responds with a first query packet (e.g., Topology Query) after receiving the first authentication packet. The set-top box then responds with a first handshake packet (e.g., Topology Response) after receiving the first query packet. The target routing device sends a second authentication packet (e.g., Topology Discover) after receiving the first handshake packet, and the set-top box responds with a second query packet (e.g., Topology Query). The target routing device then responds with a second handshake packet (e.g., Topology Response) after receiving the second query packet, thus completing the bidirectional authentication between the set-top box and the target routing device, and forming a network. In the automatic configuration request process (2), the set-top box sends a configuration compatibility request (e.g., AP autoconfiguration search) to the target routing device, which responds with a compatibility permission packet (e.g., AP autoconfiguration response). In the automatic configuration sending process (3), the set-top box sends a parameter acquisition request (e.g., AP autoconfiguration WSC (M1)) to the target routing device, and the target routing device responds with multiple sets of hotspot configuration parameters after receiving the parameter acquisition request (e.g., AP autoconfiguration WSC (M2) (2.4G) and AP autoconfiguration WSC (M2) (5G)), enabling the set-top box to synchronize and update the hotspot configuration parameter of the target routing device. In the wireless hotspot enablement process (4), the set-top box generates a hotspot driving parameter based on the hotspot configuration parameter sent by the target routing device and the scanning results of the current environment, enables wireless hotspots on multiple frequency bands, such as 2.4G and 5G hotspots, and sends an AP autoconfiguration UP notification to the target routing device after the wireless hotspots are enabled. In this way, the set-top box can enable high-performance wireless hotspots when forming a communication network with the target routing device based on Easymesh.

The wireless hotspot enabling method provided in the above embodiments allows the set-top box to automatically synchronize and update the hotspot configuration parameter of the target routing device, avoiding the need to reconfigure the set-top box after changes to the hotspot of the target router device. This simplifies the parameter configuration process, enhances the user experience, and enables the set-top box to configure high-performance communication channels and channel parameters based on the current communication environment, improving the communication transmission rate and signal quality of the set-top box. This, in turn, better utilizes the set-top box in the communication network, enhancing the overall performance of the network.

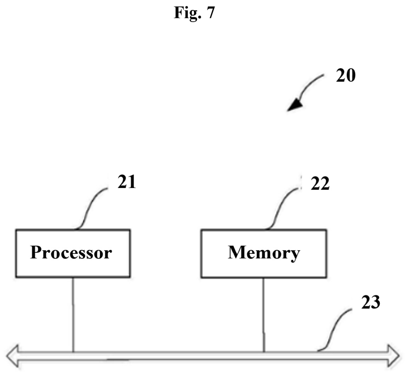

Please refer to Fig. 7, Fig. 7 shows a structure block diagram of a set-top box. As shown in Fig. 7, an embodiment of the present disclosure provides a set-top box 20. The set-top box 20 includes a memory 21, a processor 22, a program stored in the memory and executable on the processor, and a data bus 23 configured to implement connection communication between the processor 21 and the memory 22. The program is executed by the processor, so as to implement the operations of the wireless hotspot enabling method according to any one of the embodiments of the present disclosure.

For example, the following specific operations as shown in Fig. 2 can be implemented: searching for a target routing device, and performing wireless compatible networking with the target routing device, wherein the target routing device is one of the plurality of routing devices; acquiring a hotspot configuration parameter of the target routing device; acquiring a target communication channel of the set-top box in a current communication environment, and acquiring a channel parameter; optimizing the hotspot configuration parameter according to the target communication channel and the channel parameter to generate a hotspot driving parameter; and enabling a wireless hotspot of the set-top box based on the hotspot driving parameter.

In some embodiments, when the processor 22 is configured to implement the operation of searching for the target routing device, and performing the wireless compatible networking with the target routing device, the processor 22 is specifically configured to implement the following operations: broadcasting a first authentication packet to the plurality of routing devices, and determining a routing device that sends a first query packet in response to the first authentication packet as the target routing device; after receiving the first query packet sent by the target routing device, sending a first handshake packet to the target routing device, so as to complete unidirectional authentication with the target routing device; receiving a second authentication packet sent by the target routing device, and sending a second query packet to the target routing device in response to the second authentication packet; and receiving a second handshake packet from the target routing device, completing bidirectional authentication with the target routing device, and performing the wireless compatible networking with the target routing device.

In some embodiments, after being configured to implement the operation of performing the wireless compatible networking with the target routing device, the processor 22 is further specifically configured to implement the following operations: sending a configuration compatibility request to the target routing device; and establishing a configuration compatibility relationship with the target routing device after receiving a compatibility permission packet that the target routing device sends in response to the configuration compatibility request, and synchronously updating, by the set-top box, the hotspot configuration parameter of the target routing device based on the configuration compatibility relationship.

In some embodiments, the processor 22 is configured to implement the operation of acquiring the target communication channel of the set-top box in the current communication environment, and is specifically used for implementing the following operations: scanning a plurality of communication channels in the current communication environment, and acquiring a number of wireless hotspots on each of the plurality of communication channels and a signal strength of each of the wireless hotspots; determining a weighted value of each of the plurality of communication channels according to the number of the wireless hotspots and the signal strength; and determining the target communication channel according to the weighted value.

In some embodiments, the processor 22 is used for implementing the operation of acquiring the hotspot configuration parameter of the target routing device, and is specifically used for implementing the following operations: sending a parameter acquisition request to the target routing device, and acquiring the hotspot configuration parameter that the target routing device sends in response to the parameter acquisition request, wherein the hotspot configuration parameter is used for enabling the wireless hotspot of the target routing device.

In some embodiments, the target routing device sends the hotspot configuration parameter at preset time intervals in response to the parameter acquisition request; and the processor 22 is used for sending the parameter acquisition request to the target routing device, and acquiring the hotspot configuration parameter that the target routing device sends in response to the parameter acquisition request, and is also specifically used for implementing the following operations: in a case where the hotspot configuration parameter is not acquired again after the preset time interval, re-sending the parameter acquisition request to the target routing device.

In some embodiments, the processor 22 is configured to implement the operation of optimizing the hotspot configuration parameter according to the target communication channel and the channel parameter, and is specifically used for implementing the following operations: comparing a latest acquired hotspot configuration parameter with a previously acquired hotspot configuration parameter; in a case where the latest acquired hotspot configuration parameter is the same as the previously acquired hotspot configuration parameter, generating the hotspot driving parameter according to the latest acquired hotspot configuration parameter and the channel parameter; and in a case where the latest acquired hotspot configuration parameter is not the same as the previously acquired hotspot configuration parameter, re-sending the parameter acquisition request to the target routing device.

The embodiments of the present disclosure provide a communication system. The communication system includes a routing device and a set-top box. The set-top box is any set-top box provided in the embodiments of the present disclosure.

The embodiments of the present disclosure provide a storage medium, which is used for computer readable storage. The storage medium stores one or more programs. The one or more programs may be executed by one or more processors, so as to implement the operations of the wireless hotspot enabling method according to any one of the embodiments of the present disclosure.

Exemplary embodiments of the present disclosure have been described above with reference to the accompanying drawings, which thus are not limitative of the scope of the present disclosure. Any modifications, equivalent replacements, and improvements made by those skilled in the art without departing from the scope of the present disclosure shall fall within the scope of the claims of the present disclosure.

**Claims**

1. A wireless hotspot enabling method, applied to a set-top box supporting wireless compatible networking with a plurality of routing devices, wherein the wireless hotspot enabling method comprises:

   searching for a target routing device, and performing wireless compatible networking with the target routing device, wherein the target routing device is one of the plurality of routing devices; acquiring a hotspot configuration parameter of the target routing device; acquiring a target communication channel of the set-top box in a current communication environment, and acquiring a channel parameter; optimizing the hotspot configuration parameter according to the target communication channel and the channel parameter to generate a hotspot driving parameter; and enabling a wireless hotspot of the set-top box based on the hotspot driving parameter.

2. The wireless hotspot enabling method according to claim 1, wherein searching for the target routing device, and performing the wireless compatible networking with the target routing device comprises:

   broadcasting a first authentication packet to the plurality of routing devices, and determining a routing device that sends a first query packet in response to the first authentication packet as the target routing device; after receiving the first query packet sent by the target routing device, sending a first handshake packet to the target routing device, so as to complete unidirectional authentication with the target routing device; receiving a second authentication packet sent by the target routing device, and sending a second query packet to the target routing device in response to the second authentication packet; and

receiving a second handshake packet from the target routing device, completing bidirectional authentication with the target routing device, and performing the wireless compatible networking with the target routing device.

3. The wireless hotspot enabling method according to claim 1 or 2, wherein after performing the wireless compatible networking with the target routing device, the wireless hotspot enabling method further comprises:

sending a configuration compatibility request to the target routing device; and
establishing a configuration compatibility relationship with the target routing device after receiving a compatibility permission packet that the target routing device sends in response to the configuration compatibility request, and synchronously updating, by the set-top box, the hotspot configuration parameter of the target routing device based on the configuration compatibility relationship.

4. The wireless hotspot enabling method according to claim 1, wherein acquiring the target communication channel of the set-top box in the current communication environment comprises:

scanning a plurality of communication channels in the current communication environment, and acquiring a number of wireless hotspots on each of the plurality of communication channels and a signal strength of each of the wireless hotspots; determining a weighted value of each of the plurality of communication channels according to the number of the wireless hotspots and the signal strength; and
determining the target communication channel according to the weighted value.

5. The wireless hotspot enabling method according to claim 1, wherein acquiring the hotspot configuration parameter of the target routing device comprises: sending a parameter acquisition request to the target routing device, and acquiring the hotspot configuration parameter that the target routing device sends in response to the parameter acquisition request, wherein the hotspot configuration parameter is used for enabling the wireless hotspot of the target routing device.

6. The wireless hotspot enabling method according to claim 5, wherein the target routing device sends the hotspot configuration parameter at preset time intervals in response to the parameter acquisition request, sending the parameter acquisition request to the target routing device, and acquiring the hotspot configuration parameter that the target routing device sends in response to the parameter acquisition request further comprises:
in a case where the hotspot configuration parameter is not acquired again after the preset time interval, re-sending the parameter acquisition request to the target routing device.

7. The wireless hotspot enabling method according to claim 6, wherein optimizing the hotspot configuration parameter according to the target communication channel and the channel parameter comprises:

comparing a latest acquired hotspot configuration parameter with a previously acquired hotspot configuration parameter;
in a case where the latest acquired hotspot configuration parameter is the same as the previously acquired hotspot configuration parameter, generating the hotspot driving parameter according to the latest acquired hotspot configuration parameter and the channel parameter; and
in a case where the latest acquired hotspot configuration parameter is not the same as the previously acquired hotspot configuration parameter, re-sending the parameter acquisition request to the target routing device.

8. A set-top box, comprising a memory, a processor, a program stored on the memory and capable of running on the processor, and a data bus for implementing connection communication between the processor and the memory, wherein the program, when executed by the processor, implements operations of the wireless hotspot enabling method according to any one of claims 1-7.

9. A communication system, comprising a routing device and a set-top box, wherein the set-top box is the set-top box according to claim 8.

10. A storage medium for computer readable storage, wherein the storage medium stores one or more programs, and the one or more programs are executable by one or more processors, so as to cause the one or more processors to implement operations of the wireless hotspot enabling method according to any one of claims 1-7.

**Fig. 1**

**Fig. 2**

S101
Searching for a target routing device, and performing wireless compatible networking with the target routing device, wherein the target routing device is one of the plurality of routing devices

S102
Acquiring a hotspot configuration parameter of the target routing device

S103
Acquiring a target communication channel of the set-top box in a current communication environment, and acquiring a channel parameter

S104
Optimizing the hotspot configuration parameter according to the target communication channel and the channel parameter to generate a hotspot driving parameter

S105
Enabling a wireless hotspot of the set-top box based on the hotspot driving parameter

**Fig. 3**

S201

Broadcasting a first authentication packet (e.g., Topology Discover) to the plurality of routing devices, and determining a routing device that sends a first query packet (e.g., Topology Query) in response to the first authentication packet as the target routing device

S202

After receiving the first query packet (e.g., Topology Query) sent by the target routing device, sending a first handshake packet (e.g., Topology Response) to the target routing device, so as to complete unidirectional authentication with the target routing device

S203

Receiving a second authentication packet sent by the target routing device, and sending a second query packet to the target routing device in response to the second authentication packet

S204

Receiving a second handshake packet from the target routing device, completing bidirectional authentication with the target routing device, and performing the wireless compatible networking with the target routing device

**Fig. 4**

Target routing device

Set-top box

S301. Sending a configuration update packet after updating a hotspot configuration parameter

S302. Sending a parameter acquisition request

S303. Sending the updated hotspot configuration parameter

S304. Re-enabling the wireless hotspot according to the updated hotspot configuration parameter

**Fig. 5**

Target routing
device

Set-top box

(1) Networking
process

First authentication packet

First query packet

First handshake packet

Second authentication packet

Second query packet

Second handshake packet

(2) Automatic
configuration
request

AP autoconfiguration search

AP autoconfiguration response

(3) Automatic
configuration
sending

AP Autoconfiguration WSC(M1)(2.4G)

AP Autoconfiguration WSC(M2)(2.4G)

AP Autoconfiguration WSC(M2)(5G)

(4) Wireless
hotspot
enabling

Generating hotspot
driving parameter

hostapd

2.4G
hotspot

5G
hotspot

AP Autoconfiguration UP

**Fig. 6**

**Fig. 7**

20

21    22

| Processor | | Memory |

23

## INTERNATIONAL SEARCH REPORT

| International application No. |
|---|
| **PCT/CN2023/130876** |

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, CNKI: 机顶盒, 路由, AP, 接入点, 热点, easymesh, 兼容, 组网, WIFI, 参数, 优化, 信道, 驱动, set, top, box, STB, access point, hostapd, driver, channel, optimize

### C. DOCUMENTS CONSIDERED TO BE RELEVANT

| Category* | Citation of document, with indication, where appropriate, of the relevant passages | Relevant to claim No. |
|---|---|---|
| X | CN 112839330 A (ZTE CORP.) 25 May 2021 (2021-05-25)<br>description, paragraphs 31-118 | 1-10 |
| A | CN 103974386 A (ZHUHAI GOTECH ELECTRONIC TECHNOLOGY CO., LTD.) 06 August 2014 (2014-08-06)<br>entire document | 1-10 |
| A | CN 107370621 A (GUANGZHOU CVTE ELECTRONIC TECHNOLOGY CO., LTD. et al.) 21 November 2017 (2017-11-21)<br>entire document | 1-10 |
| A | CN 111935754 A (GUANGZHOU LANGO ELECTRONIC TECHNOLOGY CO., LTD.) 13 November 2020 (2020-11-13)<br>entire document | 1-10 |
| A | WO 2021161225 A1 (AIRTIES KABLOSUZ ILETISIM SANAYI VE DIS TICARET A.S.) 19 August 2021 (2021-08-19)<br>entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 January 2024** | **22 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/130876**

| Patent document cited in search report | | | Publication date (day/month/year) | Patent family member(s) | | | Publication date (day/month/year) |
|---|---|---|---|---|---|---|---|
| CN | 112839330 | A | 25 May 2021 | None | | | |
| CN | 103974386 | A | 06 August 2014 | None | | | |
| CN | 107370621 | A | 21 November 2017 | None | | | |
| CN | 111935754 | A | 13 November 2020 | None | | | |
| WO | 2021161225 | A1 | 19 August 2021 | EP | 4104489 | A1 | 21 December 2022 |
| | | | | US | 2023080739 | A1 | 16 March 2023 |

Form PCT/ISA/210 (patent family annex) (July 2022)

**EP 4 651 542 A1**

**Patent documents cited in the description**

- CN 202310217095